# EUROPEAN PATENT SPECIFICATION

(11) **EP 4 448 454 B1**
(45) Date of publication and mention of the grant of the patent: **18.03.2026**
(21) Application number: 22839261.9
(22) Date of filing: 15.12.2022
(51) Int. Cl.: C01D 15/04, H01M 4/00, H01M 10/00, C01B 25/30, C01B 25/39

(54) **LITHIUM ION-CONDUCTING SOLID MATERIALS**
LITHIUM-IONEN-LEITENDE FESTSTOFFMATERIALIEN
MATÉRIAUX SOLIDES CONDUCTEURS D'IONS LITHIUM

(30) Priority: 17.12.2021 EP 21215717
(43) Date of publication of application: 23.10.2024
(73) Proprietor: BASF SE, 67056 Ludwigshafen am Rhein (DE); Karlsruher Institut für Technologie, 76131 Karlsruhe (DE)
(72) Inventor: LIN, Jing, 76131 Karlsruhe (DE); STRAUSS, Florian, 76131 Karlsruhe (DE); BREZESINSKI, Torsten, 76131 Karlsruhe (DE); KONDRAKOV, Aleksandr, 67056 Ludwigshafen (DE)
(74) Representative: Eisenführ Speiser
(86) International application number: PCT/EP2022/086072
(87) International publication number: WO 2023/111138

(56) References cited:
- OHNO SANEYUKI ET AL: "Further Evidence for Energy Landscape Flattening in the Superionic Argyrodites Li 6+ x P 1- x M x S 5 I (M = Si, Ge, Sn)", vol. 31, no. 13, 11 June 2019 (2019-06-11), US, pages 4936 - 4944, XP055928049, ISSN: 0897-4756, Retrieved from the Internet <URL:https://pubs.acs.org/doi/pdf/10.1021/acs.chemmater.9b01857> DOI: 10.1021/acs.chemmater.9b01857
- ZHOU LAIDONG ET AL: "New Family of Argyrodite Thioantimonate Lithium Superionic Conductors", JOURNAL OF THE AMERICAN CHEMICAL SOCIETY, vol. 141, no. 48, 23 October 2019 (2019-10-23), pages 19002 - 19013, XP055928044, ISSN: 0002-7863, DOI: 10.1021/jacs.9b08357
- MINAFRA NICOLÒ ET AL: "Effect of Si substitution on the structural and transport properties of superionic Li-argyrodites", JOURNAL OF MATERIALS CHEMISTRY A, vol. 6, no. 2, 1 January 2018 (2018-01-01), GB, pages 645 - 651, XP055927839, ISSN: 2050-7488, DOI: 10.1039/C7TA08581H
- KRAFT MARVIN A. ET AL: "Inducing High Ionic Conductivity in the Lithium Superionic Argyrodites Li 6+ x P 1- x Ge x S 5 I for All-Solid-State Batteries", JOURNAL OF THE AMERICAN CHEMICAL SOCIETY, vol. 140, no. 47, 28 November 2018 (2018-11-28), pages 16330 - 16339, XP055927836, ISSN: 0002-7863, DOI: 10.1021/jacs.8b10282
- YU CHUANG ET AL: "Recent development of lithium argyrodite solid-state electrolytes for solid-state batteries: Synthesis, structure, stability and dynamics", NANO ENERGY, ELSEVIER, NL, vol. 83, 6 February 2021 (2021-02-06), XP086943024, ISSN: 2211-2855, [retrieved on 20210206], DOI: 10.1016/J.NANOEN.2021.105858

## Description

Described are a solid material which has ionic conductivity for lithium ions, a process for preparing said solid material, a use of said solid material as a solid electrolyte for an electrochemical cell, a solid structure selected from the group consisting of a cathode, an anode and a separator for an electrochemical cell comprising the solid material, and an electrochemical cell comprising such solid structure.

Due to the wide-spread use of solid-state lithium batteries, there is an increasing demand for solid-state electrolytes having a high conductivity for lithium ions. An important class of such solid electrolytes are lithium argyrodites.

US 2010/290969A1 discloses lithium argyrodite of the general formula:

Li⁺₍₁₂₋ₙ₋ₓ₎Bⁿ⁺X²⁻₆₋ₓY⁻ₓ

where
B is selected from the group P, As, Ge, Ga, Sb, Si, Sn, Al, In, Ti, V, Nb, and Ta,
X is selected from the group S, Se, and Te,
Y is selected from the group Cl, Br, I, F, CN, OCN, SCN, N₃,
and where 0 ≤ x ≤ 2.

Only the following specific materials are disclosed: Li₆PS₅I, Li₆PS₅Br, Li₆PS₅Cl, Li₇PS₅Se.

US 10,483,587 B2 discloses a sulfide solid electrolyte containing lithium, phosphorus, sulphur, and two or more of elements X selected from halogen elements, where the sulfide solid electrolyte has an argyrodite-type crystal structure and a molar ratio of sulphur to phosphorus "b(S/P)" and a molar ratio of the element X to phosphorus "c(X/P)" satisfying the formula 0.23 < c / b < 0.57.

Related art is also
Oh Saneyuki et al., Chem. Mater. 2019, 31, 4936-4944
Zhou et al., J. Am. Chem. Soc. 2019, 141, 19002-19013

There is an ongoing need for solid lithium-ion conductors which exhibit suitable ionic conductivity for application as solid electrolyte in solid-state lithium batteries

It is an objective of the present disclosure to provide a solid material which may be used as a solid lithium ion-conducting electrolyte for an electrochemical cell. In addition, there is provided a process for preparing said solid material, a use of said solid material as a solid electrolyte for an electrochemical cell, a solid structure selected from the group consisting of a cathode, an anode and a separator for an electrochemical cell comprising the solid material, and an electrochemical cell comprising such solid structure, wherein said solid structure comprises said solid material.

According to a first aspect, there is provided a solid material having a composition as defined in claim 1.

Solid materials of the parent composition Li₆PY₅X are known in the art, cf. e.g. the solid materials Li₆PS₅I, Li₆PS₅Cl and Li₆PS₅Br disclosed in US 2010/290969A1. Typically, solid materials of the parent composition Li₆PY₅X have an argyrodite structure. It is understood that solid materials having the above-defined parent composition Li₆PY₅X are not solid materials according to the present invention.

In the solid materials described herein which have a composition derived from said parent composition, 10 to 90 atom% of the phosphorus are substituted by cations selected from the group consisting of Zn²⁺, Ga³⁺, Si⁴⁺, Ge⁴⁺, Sn⁴⁺, Sb⁵⁺ and W⁶⁺. The solid materials described herein encompass solid materials according to the claimed invention and solid materials not according to the claimed invention but useful for understanding the invention. For details see below. In a solid material described herein, at least three, and up to six of said cations which substitute phosphorus are present. As used herein, substitution of phosphorus by the above-mentioned cations means that a fraction of the lattice sites, which in the parent material are occupied by phosphorus, in a material described herein is occupied by the above-mentioned cations. Accordingly, the phosphorus content of said solid material is lower than in the parent composition, namely 10 to 90 atom% of the phosphorus content of the parent composition.

The cations substituting phosphorus may have a chemical valence (ionic charge) different from phosphorus. Thus, for achieving electroneutrality, the lithium content may be lower or higher than in the parent composition.

Without wishing to be bound by any theory, it is presently assumed that variation of the parent composition by partially substituting phosphorus by at least three and up to six different foreign cations selected from the group consisting of Zn²⁺, Ga³⁺, Si⁴⁺, Ge⁴⁺, Sn⁴⁺, Sb⁵⁺ and W⁶⁺ results in an increase of the configurational entropy (i.e. the compositional disorder) within the argyrodite structure, due to the introduction of foreign cations. More specifically, the configurational entropy and/or the vibrational entropy of the argyrodite material are assumed to be increased due to introduction of three to six different foreign cations selected from the group consisting of Zn²⁺, Ga³⁺, Si⁴⁺, Ge⁴⁺, Sn⁴⁺, Sb⁵⁺ and W⁶⁺ which substitute 10 to 90 atom% of the phosphorus of the parent composition. It is assumed that this effects an increase of the lithium-ion migration, resulting in an increased ionic conductivity.

Solid materials described herein have a composition according to general formula (I) (not according to the claimed invention)

Li₆₊ₘP₁₋ₓM1^{(z1)+}₍ₙ₁₎M2^{(z2)+}₍ₙ₂₎M3^{(z3)+}₍ₙ₃₎M4^{(z4)+}₍ₙ₄₎M5^{(z5)+}₍ₙ₅₎M6^{(z6)+}₍ₙ₆₎Y₅X (I)

wherein
X is one or more selected from F, Cl, Br and I, preferably one of F, Cl, Br and I,
Y is one or more selected from O, S, Se and Te, preferably one of O, S, Se and Te,
M1^{(z1)+} to M6^{(z6)+} are selected from the group consisting of Zn²⁺, Ga³⁺, Si⁴⁺, Ge⁴⁺, Sn⁴⁺, Sb⁵⁺ and W⁶⁺,
each of (n1) to (n3) is a number in the range of from 0.05 to 0.3,
(n4) is 0 or a number in the range of from 0.05 to 0.3,
(n5) is 0 or a number in the range of from 0.05 to 0.3,
(n6) is 0 or a number in the range of from 0.05 to 0.3,
wherein (n1), (n2), (n3), (n4), (n5) and (n6) are selected independently from each other with the proviso that x = (n1) + (n2) + (n3) + (n4) + (n5) + (n6), wherein 0.1 ≤ x ≤ 0.9,
and m = 5 - [5*(1-x) + (z1*n1) + (z2*n2) + (z3*n3) + (z4*n4) + (z5*n5) + (z6*n6)].

In solid materials according to formula (I), either three different cations M1^{(z1)+}, M2^{(z2)+}, M3^{(z3)+}, or four different cations M1^{(z1)+}, M2^{(z2)+}, M3^{(z3)+}, M4^{(z4)+}, or five different cations M1^{(z1)+}, M2^{(z2)+}, M3^{(z3)+}, M4^{(z4)+}, M5^{(z5)+}, or six different cations M1^{(z1)+}, M2^{(z2)+}, M3^{(z3)+}, M4^{(z4)+}, M5^{(z5)+}, M6^{(z6)+} substitute a fraction of the phosphorus content of the parent composition Li₆PY₅X. The three, four, five or six different cations are selected from the group consisting of Zn²⁺, Ga³⁺, Si⁴⁺, Ge⁴⁺, Sn⁴⁺, Sb⁵⁺ and W⁶⁺. The variables (z1) to (z6) indicate the ionic charge (chemical valency) of the related cation M1^{(z1)+} to M6^{(z6)+}, i.e. (z1) is the ionic charge of cation M1^{(z1)+}, (z2) is the ionic charge of M2^{(z2)+}, (z3) is the ionic charge of M3^{(z3)+}, (z4) is the ionic charge of M4^{(z4)+}, (z5) is the ionic charge of M5^{(z5)+}, (z6) is the ionic charge of M6^{(z6)+}.

The variables (n1) to (n6) indicate the fraction of the related cation M1^{(z1)+} to M6^{(z6)+} present in formula (I). Each of (n1) to (n3) is an independently selected number in the range of from 0.05 to 0.3. In case only three different cations M1^{(z1)+}, M2^{(z2)+}, M3^{(z3)+} are present, (n4) = (n5) = (n6) = 0. In case four different cations M1^{(z1)+}, M2^{(z2)+}, M3^{(z3)+}, M4^{(z4)+} are present, (n1) to (n4) are independently selected numbers in the range of from 0.05 to 0.3, and (n5) = (n6) = 0. In case five different cations M1^{(z1)+}, M2^{(z2)+}, M3^{(z3)+}, M4^{(z4)+}, M5^{(z5)+} are present, (n1) to (n5) are independently selected numbers in the range of from 0.05 to 0.3, and (n6) = 0. In case six different cations M1^{(z1)+}, M2^{(z2)+}, M3^{(z3)+}, M4^{(z4)+}, M5^{(z5)+} and M6^{(z6)+} are present, (n1) to (n6) are independently selected numbers in the range of from 0.05 to 0.3. In each case, (n1) to (n6) fulfill the following condition: The variable x which is the sum of (n1) to (n6) falls in the range of from 0.1 to 0.9, corresponding to a substitution of 10 to 90 atom% of phosphorus of the parent composition Li₆PY₅X by different cations M1^{(z1)+} to M6^{(z6)+}.

The variable m indicates how the content of lithium ions changes compared to the parent composition Li₆PY₅X, in order to balance for any deviation of the ionic charges of cation M1^{(z1)+} to M6^{(z6)+} from the chemical valency of phosphorus (+5). The variable m is positive when the contribution of cations having an ionic charge smaller than 5+ is larger than the contribution of cations having an ionic charge equal to higher than 5+. The variable m is negative when the contribution of cations having an ionic charge above 5+ to m is larger than the contribution of cations having an ionic charge equal to or below 5+. The variable m is 0, when the contribution of cations having an ionic charge below 5+ to m is balanced by the contribution of cations having an ionic charge above 5+ to m.

In the solid materials according to formula (I), X is one or more selected from F, Cl, Br and I, and Y is one or more selected from O, S, Se and Te. For instance, X is one of F, Cl, Br and I, and Y is one of O, S, Se and Te, e.g. X is one of F, Cl, Br and I, and Y is S.

Certain solid materials described herein have a composition according to general formula (II) (not according to the claimed invention)

Li₆₊ₘP₁₋ₓM1^{(z1)+}₍ₙ₁₎M2^{(z2)+}₍ₙ₂₎M3^{(z3)+}₍ₙ₃₎M4^{(z4)+}₍ₙ₄₎Y₅X (II)

wherein
X is one or more selected from F, Cl, Br and I, preferably one of F, Cl, Br and I,
Y is one or more selected from O, S, Se and Te, preferably one of O, S, Se and Te,
M1^{(z1)+} to M4^{(z4)+} are selected from the group consisting of Zn²⁺, Ga³⁺, Si⁴⁺, Ge⁴⁺, Sn⁴⁺, Sb⁵⁺ and W⁶⁺,
each of (n1) to (n3) is a number in the range of from 0.05 to 0.3,
(n4) is 0 or a number in the range of from 0.05 to 0.3,
wherein (n1), (n2), (n3), and (n4) are selected independently from each other with the proviso that x = (n1) + (n2) + (n3) + (n4), wherein 0.1 ≤ x ≤ 0.9,
and m = 5 - [5*(1-x) + (z1*n1) + (z2*n2) + (z3*n3) + (z4*n4)]

In solid materials according to formula (II), either three different cations M1^{(z1)+}, M2^{(z2)+}, M3^{(z3)+}, or four different cations M1^{(z1)+}, M2^{(z2)+}, M3^{(z3)+}, M4^{(z4)+} substitute a fraction of the phosphorus content of the parent composition Li₆PY₅X. The three or four cations are selected from the group consisting of Zn²⁺, Ga³⁺, Si⁴⁺, Ge⁴⁺, Sn⁴⁺, Sb⁵⁺ and W⁶⁺. The variables (z1) to (z4) indicate the ionic charge (chemical valency) of the related cation M1^{(z1)+} to M4^{(z4)+}, i.e. (z1) is the ionic charge of cation M1^{(z1)+}, (z2) is the ionic charge of M2^{(z2)+}, (z3) is the ionic charge of M3^{(z3)+}, (z4) is the ionic charge of M4^{(z4)+}.

The variables (n1) to (n4) indicate the fraction of the related cation M1^{(z1)+} to M4^{(z4)+} present in formula (II). Each of (n1) to (n3) is an independently selected number in the range of from 0.05 to 0.3. In case four cations M1^{(z1)+}, M2^{(z2)+}, M3^{(z3)+}, M4^{(z4)+} are present, (n4) is another independently selected number in the range of from 0.05 to 0.3. In case only three cations M1^{(z1)+}, M2^{(z2)+}, M3^{(z3)+} are present, (n4) = 0. In each case, (n1) to (n4) fulfill the following condition: The variable x which is the sum of (n1) to (n4) falls in the range of from 0.1 to 0.9, corresponding to a substitution of 10 to 90 atom% of phosphorus of the parent composition Li₆PY₅X by different cations M1^{(z1)+} to M4^{(z4)+} resp. M1^{(z1)+} to M3^{(z3)+} (if no fourth cation M4^{(z4)+} is present).

The variable m indicates how the content of lithium ions changes compared to the parent composition Li₆PY₅X, in order to balance for any deviation of the ionic charges of cation M1^{(z1)+} to M4^{(z4)+} resp. M1^{(z1)+} to M3^{(z3)+} (if no fourth cation M4^{(z4)+} is present) from the chemical valency of phosphorus (+5). The variable m is positive when the contribution of cations having an ionic charge smaller than 5+ is larger than the contribution of cations having an ionic charge equal to higher than 5+. The variable m is negative when the contribution of cations having an ionic charge above 5+ to m is larger than the contribution of cations having an ionic charge equal to or below 5+. The variable m is 0, when the contribution of cations having an ionic charge below 5+ to m is balanced by the contribution of cations having an ionic charge above 5+ to m.

In the solid materials according to formula (II), X is one or more selected from F, Cl, Br and I, and Y is one or more selected from O, S, Se and Te. For instance, X is one of F, Cl, Br and I, and Y is one of O, S, Se and Te, e.g. X is one of F, Cl, Br and I, and Y is S.

In a first group of solid materials described herein three different cations M1^{(z1)+}, M2^{(z2)+}, M3^{(z3)+} are present which substitute a fraction of the phosphorus content of the parent composition Li₆PY₅X.

Certain solid materials of said first group have a composition according to formula (IIa) (not according to the claimed invention)

Li₆₊ₘP₁₋ₓM1^{(z1)+}₍ₙ₁₎M2^{(z2)+}₍ₙ₂₎M3^{(z3)+}₍ₙ₃₎Y₅X (IIa)

wherein
X is selected from F, Cl, Br and I, preferably I,
Y is selected from O, S, Se and Te, preferably S,
M1^{(z1)+} to M3^{(z3)+} are selected from the group consisting of Si⁴⁺, Ge⁴⁺, Sn⁴⁺ and Sb⁵⁺,
each of (n1) to (n3) is a number in the range of from 0.05 to 0.3, wherein (n1), (n2), and (n3) are selected independently from each other with the proviso that x = (n1) + (n2) + (n3) wherein 0.1 ≤ x ≤ 0.9,
and m = 5 - [5*(1-x) + (z1*n1) + (z2*n2) + (z3*n3)].

In solid materials according to formula (lla), three different cations M1^{(z1)+}, M2^{(z2)+}, M3^{(z3)+}, substitute a fraction of the phosphorus content of the parent composition Li₆PY₅X. The three different cations are selected from the group consisting of Si⁴⁺, Ge⁴⁺, Sn⁴⁺ and Sb⁵⁺. The variables (z1) to (z3) indicate the ionic charge (chemical valency) of the related cation M1^{(z1)+} to M3^{(z3)+}, i.e. (z1) is the ionic charge of cation M1^{(z1)+}, (z2) is the ionic charge of M2^{(z2)+}, (z3) is the ionic charge of M3^{(z3)+}.

The variables (n1) to (n3) indicate the fraction of the related cation M1^{(z1)+} to M3^{(z3)+} present in formula (lla). Each of (n1) to (n3) is an independently selected number in the range of from 0.05 to 0.3, fulfilling the following condition: The variable x which is the sum of (n1) to (n3) falls in the range of from 0.1 to 0.9, corresponding to a substitution of 10 to 90 atom% of phosphorus of the parent composition Li₆PY₅X by different cations M1^{(z1)+} to M3^{(z3)+}.

The variable m indicates how the content of lithium ions changes compared to the parent composition Li₆PY₅X, in order to balance for any deviation of the ionic charges of cation M1^{(z1)+} to M3^{(z3)+} from the chemical valency of phosphorus (+5). The variable m is positive since no cations having a charge above 5+ are present.

In the solid materials according to formula (lla), X is one selected from F, Cl, Br and I, and Y is one selected from O, S, Se and Te. For instance, X is I (iodine). For instance, Y is S (sulphur).

For instance, X is I (iodine) and Y is S (sulphur). In such cases, the solid material has a composition according to formula (IIa') (not according to the invention):

Li₆₊ₘP₁₋ₓM1^{(z1)+}₍ₙ₁₎M2^{(z2)+}₍ₙ₂₎M3^{(z3)+}₍ₙ₃₎S₅I (IIa')

wherein x, n1, n2, n3, z1, z2, z3 and m are as defined above for formula (lla).

For instance, M1^{(z1)+} is Si⁴⁺, M2^{(z2)+} is Ge⁴⁺, and M3^{(z3)+} is Sb⁵⁺, X is I (iodine) and Y is S (sulphur). In such cases, the solid material has a composition according to formula (lla") (not according to the claimed invention)

Li₆₊ₘP₁₋ₓSi₍ₙ₁₎Ge₍ₙ₂₎Sb₍ₙ₃₎S₅I (IIa")

wherein x, n1, n2, n3 and m are as defined above for formula (lla).

In solid materials according to the invention, the three different cations M1^{(z1)+}, M2^{(z2)+}, M3^{(z3)+} which substitute a fraction of the phosphorus content of the parent composition Li₆PY₅X are present in equal fractions n. Such solid materials of said first group have a composition according to formula (IIc)

Li₆₊ₘP₁₋₃ₙM1^{(z1)+}ₙM2^{(z2)+}ₙM3^{(z3)+}ₙY₅X (IIc)

wherein
X is selected from F, Cl, Br and I, preferably I,
Y is selected from O, S, Se and Te, preferably S,
M1^{(z1)+} to M3^{(z3)+} are selected from the group consisting of Si⁴⁺, Ge⁴⁺, Sn⁴⁺ and Sb⁵⁺,
n is a number in the range of from 0.05 to 0.3, preferably 0.2 to 0.28 with the proviso that x = 3n wherein 0.1 ≤ x ≤ 0.9,
and m = 5 - [5*(1-3n) + n*(z1 + z2 + z3)].

In solid materials according to formula (IIc), three different cations M1^{(z1)+}, M2^{(z2)+}, M3^{(z3)+}, substitute a fraction of the phosphorus content of the parent composition Li₆PY₅X. The three cations are selected from the group consisting of Si⁴⁺, Ge⁴⁺, Sn⁴⁺ and Sb⁵⁺. The variables (z1) to (z3) indicate the ionic charge (chemical valency) of the related cation M1^{(z1)+} to M3^{(z3)+}, i.e. (z1) is the ionic charge of cation M1^{(z1)+}, (z2) is the ionic charge of M2^{(z2)+}, (z3) is the ionic charge of M3^{(z3)+}.

Each of cations M1^{(z1)+} to M3^{(z3)+} is present in the same fraction, represented by variable n, which is a number in the range of from 0.05 to 0.3, preferably 0.2 to 0.28, fulfilling the following condition: The variable x which is the sum of the fractions of the three different cations M1^{(z1)+} to M3^{(z3)+} , i.e. x = 3n, falls in the range of from 0.1 to 0.9, corresponding to a substitution of 10 to 90 atom% of phosphorus of the parent composition Li₆PY₅X by different cations M1^{(z1)+} to M3^{(z3)+}.

The variable m indicates how the content of lithium ions changes compared to the parent composition Li₆PY₅X, in order to balance for any deviation of the ionic charges of cation M1^{(z1)+} to M3^{(z3)+} from the chemical valency of phosphorus (+5). The variable m is positive since no cations having a charge above 5+ are present.

In the solid materials according to formula (IIc), X is one selected from F, Cl, Br and I, and Y is one selected from O, S, Se and Te. Preferably, X is I (iodine). Preferably, Y is S (sulphur).

Most preferably, X is I (iodine) and Y is S (sulphur). In such preferred cases, the solid material has a composition according to formula (IIc'):

Li₆₊ₘP₁₋₃ₙM1^{(z1)+}ₙM2^{(z2)+}ₙM3^{(z3)+}ₙS₅I (IIc')

wherein n, z1, z2, z3 and m are as defined above for formula (IIc).

Most preferably, M1^{(z1)+} is Si⁴⁺, M2^{(z2)+} is Ge⁴⁺, and M3^{(z3)+} is Sb⁵⁺, X is I (iodine) and Y is S (sulphur). In such preferred cases, the solid material has a composition according to formula (IIc"):

Li₆₊ₘP₁₋₃ₙSiₙGeₙSbₙS₅I (IIc")

wherein n and m are as defined above for formula (IIc).

Preferred solid materials of the above-defined first group are Li_{6.5}P_{0.25}Si_{0.25}Ge_{0.25}Sb_{0.25}S₅I, Li_{6.342}P_{0.5}Si_{0.166}Ge_{0.166}Sb_{0.166}S₅I and Li_{6.171}P_{0.75}Si_{0.083}Ge_{0.083}Sb_{0.083}S₅I.

In a second group of solid materials described herein (not according to the invention), four different cations M1^{(z1)+}, M2^{(z2)+}, M3^{(z3)+} and M4^{(z4)+} are present which substitute a fraction of the phosphorus content of the parent composition Li₆PY₅X.

Certain solid materials of said second group have a composition according to formula (IIb) (not according to the invention)

Li₆₊ₘP₁₋ₓM1^{(z1)+}₍ₙ₁₎M2^{(z2)+}₍ₙ₂₎M3^{(z3)+}₍ₙ₃₎M4^{(z4)+}₍ₙ₄₎Y₅X (IIb)

wherein
X is selected from F, Cl, Br and I, preferably I,
Y is selected from O, S, Se and Te, preferably S,
M1^{(z1)+} to M4^{(z4)+} are Si⁴⁺, Ge⁴⁺, Sn⁴⁺ and Sb⁵⁺,
each of (n1) to (n4) is a number in the range of from 0.05 to 0.3, wherein (n1), (n2), (n3) and (n4) are selected independently from each other with the proviso that x = (n1) + (n2) + (n3) + (n4) wherein 0.1 ≤ x ≤ 0.9,
and m = 5 - [(5*(1-x) + (z1*n1) + (z2*n2) + (z3*n3) + (z4*n4)].

In solid materials according to formula (IIb), four different cations M1^{(z1)+}, M2^{(z2)+}, M3^{(z3)+}, M4^{(z4)+} substitute a fraction of the phosphorus content of the parent composition Li₆PY₅X. The four cations are Si⁴⁺, Ge⁴⁺, Sn⁴⁺ and Sb⁵⁺. The variables (z1) to (z4) indicate the ionic charge (chemical valency) of the related cation M1^{(z1)+} to M4^{(z4)+}, i.e. (z1) is the ionic charge of cation M1^{(z1)+}, (z2) is the ionic charge of M2^{(z2)+}, (z3) is the ionic charge of M3^{(z3)+}, (z4) is the ionic charge of M4^{(z4)+}.

The variables (n1) to (n4) indicate the fraction of the related cation M1^{(z1)+} to M4^{(z4)+} present in formula (IIb). Each of (n1) to (n4) is an independently selected number in the range of from 0.05 to 0.3, fulfilling the following condition: The variable x which is the sum of (n1) to (n4) falls in the range of from 0.1 to 0.9, corresponding to a substitution of 10 to 90 atom% of phosphorus of the parent composition Li₆PY₅X by different cations M1^{(z1)+} to M4^{(z4)+}.

The variable m indicates how the content of lithium ions changes compared to the parent composition Li₆PY₅X, in order to balance for any deviation of the ionic charges of cation M1^{(z1)+} to M4^{(z4)+} from the chemical valency of phosphorus (+5). The variable m is positive since no cations having a charge above 5+ are present.

In the solid materials according to formula (IIb), X is one selected from F, Cl, Br and I, and Y is one selected from O, S, Se and Te. For instance, X is I (iodine). For instance, Y is S (sulphur).

For instance, X is I (iodine) and Y is S (sulphur). In such cases, the solid material has a composition according to formula (Ilb') (not according to the invention):

Li₆₊ₘP₁₋ₓSi₍ₙ₁₎Ge₍ₙ₂₎Sn₍ₙ₃₎Sb₍ₙ₄₎S₅I (IIb')

wherein x, n1, n2, n3, n4 and m are as defined above for formula (IIb).

In certain materials of the above-defined second group of solid materials described herein the four different cations M1^{(z1)+}, M2^{(z2)+}, M3^{(z3)+}, M4^{(z4)+} which substitute a fraction of the phosphorus content of the parent composition Li₆PY₅X are present in equal fractions n. Such solid materials of said second group have a composition according to formula (IId) (not according to the invention):

Li₆₊ₘP₁₋₄ₙM1^{(z1)+}ₙM2^{(z2)+}ₙM3^{(z3)+}ₙM4^{(z4)+}ₙY₅X (IId)

wherein
X is selected from F, Cl, Br and I, preferably I,
Y is selected from O, S, Se and Te, preferably S,
M1^{(z1)+} to M4^{(z4)+} are Si⁴⁺, Ge⁴⁺, Sn⁴⁺ and Sb⁵⁺,
n is a number in the range of from 0.05 to 0.22, preferably 0.15 to 0.21, with the proviso that x = 4n wherein 0.1 ≤ x ≤ 0.9,
and m = 5 - [(5*(1-4n) + n *(z1 + z2 + z3 + z4)].

In solid materials according to formula (IId), four different cations M1^{(z1)+}, M2^{(z2)+}, M3^{(z3)+}, M4^{(z4)+} substitute a fraction of the phosphorus content of the parent composition Li₆PY₅X. The four cations are Si⁴⁺, Ge⁴⁺, Sn⁴⁺ and Sb⁵⁺. The variables (z1) to (z4) indicate the ionic charge (chemical valency) of the related cation M1^{(z1)+} to M4^{(z4)+}, i.e. (z1) is the ionic charge of cation M1^{(z1)+}, (z2) is the ionic charge of M2^{(z2)+}, (z3) is the ionic charge of M3^{(z3)+} and (z4) is the ionic charge of M4^{(z4)+}.

Each of cations M1^{(z1)+} to M4^{(z4)+} is present in the same fraction, represented by variable n, which is a number in the range of from 0.05 to 0.22, preferably 0.15 to 0.21, fulfilling the following condition: The variable x which is the sum of the fractions of the four different cations M1^{(z1)+} to M4^{(z4)+} , i.e. x = 4n, falls in the range of from 0.1 to 0.9, corresponding to a substitution of 10 to 90 atom% of phosphorus of the parent composition Li₆PY₅X by different cations M1^{(z1)+} to M4^{(z4)+}.

The variable m indicates how the content of lithium ions changes compared to the parent composition Li₆PY₅X, in order to balance for any deviation of the ionic charges of cation M1^{(z1)+} to M4^{(z4)+} from the chemical valency of phosphorus (+5). The variable m is positive since no cations having a charge above 5+ are present.

In the solid materials according to formula (IId), X is one selected from F, Cl, Br and I, and Y is one selected from O, S, Se and Te. For instance, X is I (iodine). For instance, Y is S (sulphur).

For instance, X is I (iodine) and Y is S (sulphur). In such cases, the solid material has a composition according to formula (IId'):

Li₆₊ₘP₁₋₄ₙSiₙGeₙSnₙSbₙY₅X (IId')

wherein n and m are as defined above for formula (IId).

A solid material according to the above-defined first aspect may be crystalline as detectable by the X-ray diffraction (XRD) technique. A solid material is referred to as crystalline when it exhibits a long-range order that is characteristic of a crystal, as indicated by the presence of clearly defined reflections in its XRD pattern. In this context, a reflection is considered as clearly defined if its intensity is more than 10% above the background.

A solid material according to the above-defined first aspect may consist of a single phase or of more than one phase, e.g. a main phase (primary phase) and minor amounts of impurities and secondary phases. It is understood that formula (I) is an empirical formula (gross formula) as determinable by means of elemental analysis. Accordingly, formula (I) defines a composition which is averaged over all phases present in the solid material. However, a solid material according to the above-defined first aspect comprises at least one phase which as such has a composition according to formula (I). In case a crystalline solid material according to the above-defined first aspect contains more than one phase, then the weight fraction of phases which as such do not have a composition according to formula (I) (e.g. impurity phases, secondary phases) is so small that the composition averaged over all phases is according to formula (I). The total weight fraction of secondary phases and impurity phases may be 20 % or less, preferably 10 % or less, further preferably 5 % or less, most preferably 3 % or less, based on the total weight of the solid material. If present, the secondary phases and impurity phases mainly consist of the precursors used for preparing the solid material, e.g. LiX (wherein X is as defined above) and Li₂Y, (wherein Y is as defined above) and sometimes impurity phases which may originate from impurities of the precursors or from products formed by side reactions of the precursors (e.g. Li₃PS₄). For details of preparing a solid material according to the above defined first aspect, see the information provided below in the context of the second aspect of this disclosure.

In certain cases, a solid material according to the above-defined first aspect is in the form of a polycrystalline powder, or in the form of single crystals.

A crystalline solid material according to the above-defined first aspect may have an argyrodite structure characterized by the cubic space group *F*-43*m.* The argyrodite structure is determined by powder XRD measurements as generally known in the art. Details are described in the examples section.

A solid material according to the above-defined first aspect may have an ionic conductivity of 0.1 mS/cm or more, preferably 1 mS/cm or more, further preferably 10 mS/cm or more, in each case at a temperature of 25 °C. The ionic conductivity is determined in the usual manner known in the field of battery materials development by means of electrochemical impedance spectroscopy (for details see examples section below).

Preferred solid materials according to the first aspect as defined above are those having one or more of the specific preferred features disclosed above.

According to a second aspect, there is provided a process for obtaining a solid material according to the above-defined first aspect. Said process comprises the following steps:
(a) providing a reaction mixture comprising the precursors
   (1) one or more of oxide, sulfide, selenide and telluride of lithium,
   (2) one or more of oxide, sulfide, selenide and telluride of phosphorous,
   (3) one or more compound LiX wherein X is selected from F, Cl, Br and I,
   (4) compounds selected from the group consisting of metal oxides, sulfides, selenides and tellurides of at least three and up to six cations selected from the group consisting of Zn²⁺, Ga³⁺, Si⁴⁺, Ge⁴⁺, Sn⁴⁺, Sb⁵⁺ and W⁶⁺,
   (5) optionally one or more of S, Se and Te in elemental form,
      wherein in said reaction mixture the molar ratio of all elements is selected so that it matches a composition derived from the parent composition

         Li₆PY₅X
      wherein X is one or more selected from Cl, Br and I, and Y is one or more selected from O, S, Se and Te,
      wherein 10 to 90 atom% of P are substituted by cations from the group consisting of Zn²⁺, Ga³⁺, Si⁴⁺, Ge⁴⁺, Sn⁴⁺, Sb⁵⁺ and W⁶⁺,
(b) reacting the precursors to obtain a solid material having a composition derived from the parent composition

   Li₆PY₅X

   wherein X is one or more selected from F, Cl, Br and I and Y is one or more selected from O, S, Se and Te,
   wherein 10 to 90 atom% of P are substituted by cations from the group consisting of Zn²⁺, Ga³⁺, Si⁴⁺, Ge⁴⁺, Sn⁴⁺, Sb⁵⁺ and W⁶⁺,
   wherein at least three, and up to six different cations of said group are present.

Said process according to the second aspect encompass processes according to the claimed invention and processes not according to the claimed invention but useful for understanding the invention. A process according to the invention is as defined in claim 7.

In step a) of the process according to the invention, a reaction mixture comprising precursors for the reaction product to be formed in step b) is provided. Said precursors are:
(1) one or more of oxide, sulfide, selenide and telluride of lithium
(2) one or more of oxide, sulfide, selenide and telluride of phosphorous
(3) one or more compound LiX wherein X is selected from F, Cl, Br and I
(4) compounds selected from the group consisting of metal oxides, sulfides, selenides and tellurides of three cations selected from the group consisting of Si⁴⁺, Ge⁴⁺, Sn⁴⁺and Sb⁵⁺
(5) optionally one or more of S, Se and Te in elemental form.

Preferably said reaction mixture provided in step (a) consists of precursors (1) to (4), or of precursors (1) to (5) a defined above.

In said reaction mixture provided in step (a) the molar ratio of the elements matches one of general formulae (IIc), (IIc'), (IIc") as defined above.

For preparing a solid material having a composition according to formula (I) (not according to the claimed invention), precursor (4) comprises or consists of compounds selected from the group consisting of metal oxides, sulfides, selenides or tellurides of at least three and up to six metal cations selected from the group consisting of Zn²⁺, Ga³⁺, Si⁴⁺, Ge⁴⁺, Sn⁴⁺, Sb⁵⁺ and W⁶⁺.

For preparing a solid material having a composition according to formula (II) (not according to the claimed invention), precursor (4) comprises or consists of compounds selected from the group consisting of metal oxides, sulfides, selenides or tellurides of three or four metal cations selected from the group consisting of Zn²⁺, Ga³⁺, Si⁴⁺, Ge⁴⁺, Sn⁴⁺, Sb⁵⁺ and W⁶⁺.

In certain processes described herein,
said precursor (1) is Li₂S, and/or
said precursor (2) is P₂S₅, and/or
said precursor (3) is Lil, and/or
said precursor (4) is selected from the group consisting of SiS₂, GeS₂, SnS₂ and Sb₂S₃,
and/or said precursor (5) is elemental sulphur or is not present.

For preparing a solid material having a composition according to formula (lla) (not according to the claimed invention) or (IIc) (according to the claimed invention), precursor (4) comprises or consists of compounds selected from the group consisting of metal oxides, sulfides, selenides or tellurides of three cations selected from the group consisting of Si⁴⁺, Ge⁴⁺, Sn⁴⁺, and Sb⁵⁺.

For preparing a solid material having a composition according to formula (lla') (not according to the claimed invention) or (IIc') (according to the claimed invention)
precursor (1) comprises or consists of Li₂S,
precursor (2) comprises or consists of P₂S₅,
precursor (3) comprises or consists of Lil,
precursor (4) comprises or consists of three compounds selected from the group consisting of SiS₂, GeS₂, SnS₂ and Sb₂S₃,
precursor (5) comprises or consists of elemental sulphur or is not present.

For preparing a solid material having a composition according to formula (lla") (not according to the claimed invention) or (IIc") (according to the claimed invention)
precursor (1) comprises or consists of Li₂S,
precursor (2) comprises or consists of P₂S₅,
precursor (3) comprises or consists of Lil,
precursor (4) comprises or consists of SiS₂, GeS₂ and Sb₂S₃,
precursor (5) comprises or consists of elemental sulphur or is not present.

For preparing a solid material having a composition according to formula (IIb) (not according to the claimed invention) or (Ild) (not according to the claimed invention) precursor (4) comprises or consists of compounds selected from the group consisting of oxides, sulfides, selenides or tellurides of all of Si⁴⁺, Ge⁴⁺, Sn⁴⁺, and Sb⁵⁺.

For preparing a solid material having a composition according to formula (IIb') (not according to the claimed invention) or (IId') (not according to the claimed invention)
precursor (1) comprises or consists of Li₂S
precursor (2) comprises or consists of P₂S₅
precursor (3) comprises or consists of Lil
precursor (4) comprises or consists of SiS₂, GeS₂, SnS₂ and Sb₂S₃, and
precursor (5) comprises or consists of elemental sulphur or is not present.

In step (a) of the above-defined process, the reaction mixture may be obtained by mixing the precursors. Mixing the precursors may be performed by means of grinding the precursors together. Grinding can be done using any suitable means.

It is useful that in step (a) any handling is performed under a protective gas atmosphere.

In step (b) of the process according to the invention, the precursors are reacted to obtain a solid material as defined above. In other words, in step (b) the precursors in the reaction mixture react with each other to obtain a solid material having a composition according to general formula (llc). Reacting of the precursors may be achieved e.g. by thermochemical processing or by mechanochemical processing.

In a first preferred alternative of the process according to the invention, reacting of the precursors in step b) is achieved by thermochemical processing. Such process comprises the following steps:
(a) preparing or providing a solid reaction mixture comprising the precursors as defined above
(b1) heat-treating the reaction mixture in a temperature range of from 200°C to 600°C for a total duration of 1 to 48 hours or more so that a reaction product is formed and cooling the reaction product so that a solid material having a composition according to general formula (llc) is obtained.

The reaction mixture which is provided in step (a) may be formed into pellets, which are heat-treated in step (b1). Then, a solid material in the form of pellets or chunks is obtained, which may be ground into powder for further processing.

The reaction mixture prepared in process step (a) is heat-treated in step (b1) to enable the reaction of the precursors. Said reaction is considered to be substantially a solid-state reaction, i.e. it occurs with the reaction mixture being in the solid state.

Heat-treating may be performed in a closed vessel. The closed vessel may be a sealed quartz tube or any other type of container which is capable of withstanding the temperature of the heat treatment and is not subject to reaction with any of the precursors, such as a glassy carbon crucible or a tantalum crucible.

In step (b1) the reaction mixture may be heat-treated in a temperature range of from 200 °C to 600 °C for a total duration of 1 hours to 48 hours so that a reaction product is formed. More specifically, in step (b1) the reaction mixture may be heat-treated in a temperature range of 350 °C to 550 °C for a total duration of 5 hours to 30 hours. The heat treatment in step (b1) may be carried out under vacuum or under a protective gas atmosphere.

When the duration of the heat treatment of step (b1) is completed, the formed reaction product is allowed to cool down. Thus, a solid material having a composition according to general formula (llc) is obtained. Cooling of the reaction product may be performed using a cooling rate of 1 to 10 °C per minute. Alternatively, cooling is achieved by switching off the heating after the duration of heat treatment is completed (so-called natural cooling).

In a second preferred alternative of the process according to the invention, reacting of the precursors in step (b) is achieved by mechanochemical treatment. Such process comprises the following steps:
(a) preparing or providing a solid reaction mixture comprising the precursors as defined above
(b2) mechanochemical treatment of the solid reaction mixture so that a solid material having a composition according to general formula (llc) is obtained.

In step (b2), mechanochemical treatment may be achieved by means of mechanochemical milling, e.g. ball-milling. Devices, e.g. ball mills, and their use for mechanochemical treatment are generally known in the art. Mechanochemical treatment is preferably performed at a rotation rate of from 100 rpm to 500 rpm over a duration of from 15 to 30 hours. In certain cases, mechanochemical treatment is performed for 0.5 to 3 hours at a rate in the range of from 100 rpm to 300 rpm, followed by further 12 to 29 hours at a rate of from 400 rpm to 500 rpm.

The reaction product obtained by ball milling is typically in the form of a powder.

The process according to the above-defined second preferred alternative may further comprise the following step:
(c) annealing the solid material obtained by mechanochemical treatment in a temperature range of from 200°C to 600°C for a total duration of 1 to 48 hours and cooling the annealed solid material.

Annealing of the reaction product obtained by mechanochemical treatment in step (b1) results in an increased crystallinity which is indicated by the presence of more clearly defined reflections in the X-ray diffraction pattern, compared to a solid material having the same composition and prepared in the same manner (i.e. same steps (a) and (b2)) but without step (c).

Preferably, the powder obtained by step (b2) is pressed into pellets which are annealed in step (c2).

Annealing may be performed in a closed vessel. The closed vessel may be a sealed quartz tube or any other type of container which is capable of withstanding the temperature of the annealing and is not subject to reaction with any of the precursors, such as a glassy carbon crucible or a tantalum crucible.

In step (c) the reaction mixture may be annealed in a temperature range of from 200 °C to 600 °C for a total duration of 1 hours to 48 hours. More specifically, in step (c) the reaction mixture may be annealed in a temperature range of 350 °C to 550 °C for a total duration of 5 hours to 30 hours. The heat treatment in step (c) may be carried out under vacuum or under a protective gas atmosphere.

When the duration of the heat treatment of step (c) is completed, the formed reaction product is allowed to cool down. Thus, a solid material having a composition according to general formula (IIc) is obtained. Cooling of the reaction product may be performed using a cooling rate of 1 to 10 °C per minute, or by quenching, e.g. in liquid nitrogen. Alternatively, cooling is achieved by switching off the heating after the duration of heat treatment is completed (so-called natural cooling).

Preferred processes according to the second aspect as defined herein are those having one or more of the specific features disclosed above.

A solid material according to the above-defined first aspect resp. obtained by the process according to the above-defined second aspect can be used as a solid electrolyte for an electrochemical cell. Herein the solid electrolyte may form a component of a solid structure for an electrochemical cell, wherein said solid structure is selected from the group consisting of cathode, anode and separator. Accordingly, a solid material according to the above-defined first aspect resp. obtained by the process according to the above-defined second aspect can be used (if necessary in combination with additional components) for producing a solid structure for an electrochemical cell, such as a cathode, an anode or a separator.

Thus, the present disclosure further provides the use of a solid material according to the above-defined first aspect resp. obtained by the process according to the above-defined second aspect as a solid electrolyte for an electrochemical cell. Herein, the solid material according to the above-defined first aspect resp. obtained by the process according to the above-defined second aspect has a composition according to one of general formulae (IIc), (IIc'), (IIc"), as defined above. Regarding specific and preferred solid materials according to the above-defined first aspect resp. obtained by the process according to the above-defined second aspect, the same applies as disclosed above in the context of the first aspect.

More specifically, the present disclosure further provides the use of a solid material according to the above-defined first aspect resp. obtained by the process according to the above-defined second aspect as a component of a solid structure for an electrochemical cell, wherein said solid structure is selected from the group consisting of cathode, anode and separator.

In the context of the present disclosure, the electrode where during discharging a net negative charge occurs is called the anode and the electrode where during discharging a net positive charge occurs is called the cathode. Suitable electrochemically active cathode materials and suitable electrochemically active anode materials are known in the art. The cathode of a solid-state electrochemical cell usually comprises beside an active cathode material as a further component a solid electrolyte. Also the anode of a solid-state electrochemical cell usually comprises a solid electrolyte as a further component beside an active anode material. Said solid electrolyte may be a solid material according to the above-defined first aspect resp. obtained by the process according to the above-defined second aspect.

In an electrochemical cell, a separator electronically separates a cathode and an anode from each other. In a solid-state electrochemical cell, the separator comprises a solid electrolyte. Said solid electrolyte may be a solid material according to the above-defined first aspect resp. obtained by the process according to the above-defined second aspect.

The present disclosure further provides a solid structure for an electrochemical cell, wherein the solid structure is selected from the group consisting of cathode, anode and separator, wherein the solid structure for an electrochemical cell comprises a solid material according to the above-defined first aspect resp. obtained by the process according to the above-defined second aspect. Herein, the solid material according to the above-defined first aspect resp. obtained by the process according to the above-defined second aspect has a composition according to one of general formulae (IIc), (IIc), (IIc"), as defined above.

The form of the solid structure for an electrochemical cell, in particular for a solid-state lithium battery, depends in particular on the form of the electrochemical cell itself.

The present disclosure further provides a solid structure for an electrochemical cell, wherein the solid structure is selected from the group consisting of cathode, anode and separator, wherein the solid structure for an electrochemical cell comprises a solid material according to the above-defined first aspect resp. obtained by the process according to the above-defined second aspect.

The present disclosure further provides an electrochemical cell comprising a solid material according to the above-defined first aspect resp. obtained by the process according to the above-defined second aspect. In said electrochemical cell, the solid material according to the above-defined first aspect resp. obtained by the process according to the above-defined second aspect may form a component of one or more solid structures selected from the group consisting of cathode, anode and separator.

The above-defined electrochemical cell may be a rechargeable electrochemical cell comprising the following constituents
α) at least one anode,
β) at least one cathode,
γ) at least one separator,
wherein at least one of the three constituents is a solid structure selected from the group consisting of cathode, anode and separator comprises a solid material according to the above-defined first aspect resp. obtained by the process according to the above-defined second aspect.

Suitable electrochemically active cathode materials and suitable electrochemically active anode materials are known in the art. In an electrochemical cell as described above the anode α) may comprise graphitic carbon, metallic lithium or a metal alloy comprising lithium as the anode active material.

Electrochemical cells as described above may be alkali metal containing cells, especially lithium-ion containing cells. In lithium-ion containing cells, the charge transport is effected by Li⁺ ions.

The electrochemical cell may have a disc-like or a prismatic shape. The electrochemical cells can include a housing that can be from steel or aluminum.

A plurality of electrochemical cells as described above may be combined to a solid-state battery, which has both solid electrodes and solid electrolytes. A further aspect of the present disclosure refers to batteries, more specifically to an alkali metal ion battery, in particular to a lithium-ion battery comprising at least one electrochemical cell as described above, for example two or more electrochemical cells as described above. Electrochemical cells as described above can be combined with one another in alkali metal ion batteries, for example in series connection or in parallel connection. Series connection is preferred.

The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of this disclosure is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electrochemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated further by the following examples which are not limiting.

### Examples

### 1. Material preparation

All steps were conducted under Argon atmosphere.

In step (a), four different reaction mixtures (total amount around 1.5 g) consisting of the precursors Li₂S (99.99%, Sigma Aldrich), P₂S₅ (99%, Sigma Aldrich), GeS₂ (99.9%, GoodFellow), SiS₂ (99.99%, GoodFellow), Sb₂S₃ (99.99%, Alfa Aesar), S₈ (99.99%, Sigma Aldrich) and Lil (99.999%, Sigma Aldrich) was loaded into a 70 mL zirconia milling jar with 10 zirconia milling balls (10 mm diameter). The stoichiometric ratio of the precursors was selected so that it matches a composition selected from Li_{6.5}P_{0.25}Si_{0.25}Ge_{0.25}Sb_{0.25}S₅I, Li_{6.342}P_{0.5}Si_{0.166}Ge_{0.166}Sb_{0.166}S₅I and Li_{6.171}P_{0.75}Si_{0.083}Ge_{0.083}Sb_{0.083}S₅I.

For comparison, a reaction mixture consisting of the above-mentioned precursors except for P₂S₅ was provided. Here, the stoichiometric ratio of the precursors was selected so that it matches a composition Li_{6.7}Si_{0.33}Ge_{0.33}Sb_{0.33}S₅I.

Reacting of the precursors was achieved by mechanochemical processing. Thus, in step (b) the reaction mixture was milled for 1 h at 250 rpm, and then the speed was increased to 450 rpm and milling was continued for another 20 h.

The recovered powder was pressed into the pellets (~ 300 mg, 10 mm diameter) at 3 t and vacuum sealed (10⁻³ bar) in quartz ampules. The ampules were pre-dried at 500 °C for 10 min using a heat gun under dynamic vacuum (10⁻³ mbar) to avoid trace water.

The samples were subsequent annealed at 400 °C for 24 h (step (c) with a heating and cooling rate of 5 °C/min. The cooling rate corresponds to natural cooling.

The sample having the composition Li_{6.7}Si_{0.33}Ge_{0.33}Sb_{0.33}S₅I (not according to the invention) and an additional sample of the composition Li_{6.5}P_{0.25}Si_{0.25}Ge_{0.25}Sb_{0.25}S₅I were annealed at 500 °C for 24 h (step (c) with a heating and cooling rate of 5 °C/min.

For the composition Li_{6.5}P_{0.25}Si_{0.25}Ge_{0.25}Sb_{0.25}S₅I, additional samples were prepared without annealing (step (c)).

For the composition Li_{6.5}P_{0.25}Si_{0.25}Ge_{0.25}Sb_{0.25}S₅I, additional samples were prepared to study the influence of the following alternative cooling conditions in step (c): either slow cooling over 48 hours, or quenching in liquid nitrogen.

### 2. Structural analysis

X-ray powder diffraction (XRD) measurements were conducted on a STADI P diffractometer (STOE) at room temperature with Mo-Kα1 radiation (A = 0.70931715 Å) and annular collimator equipped Mythen 1k detector (Dectris). Samples were sealed in borosilicate capillaries (0.48 mm inner diameter and 0.01 mm wall thickness; Hilgenberg) under argon atmosphere.

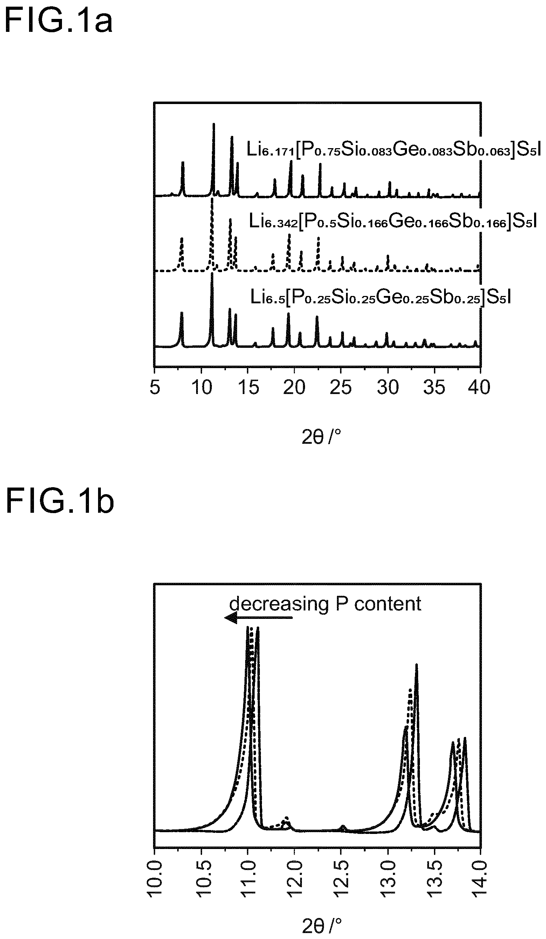

The three different materials having a composition according to general formula Li₍₆₊ₘ₎P₍₁₋₃ₙ₎SiₙGeₙSbₙS₅I show typical single phase XRD pattern referring to the so called cubic argyrodite structure (Figure 1a). Moreover, a gradual shift of the reflections to lower 2θ angles was observed with decreasing phosphorous content (fig. 1b), indicating the presence of a solid solution between the different cationic substituents (P, Si, Ge and Sb).

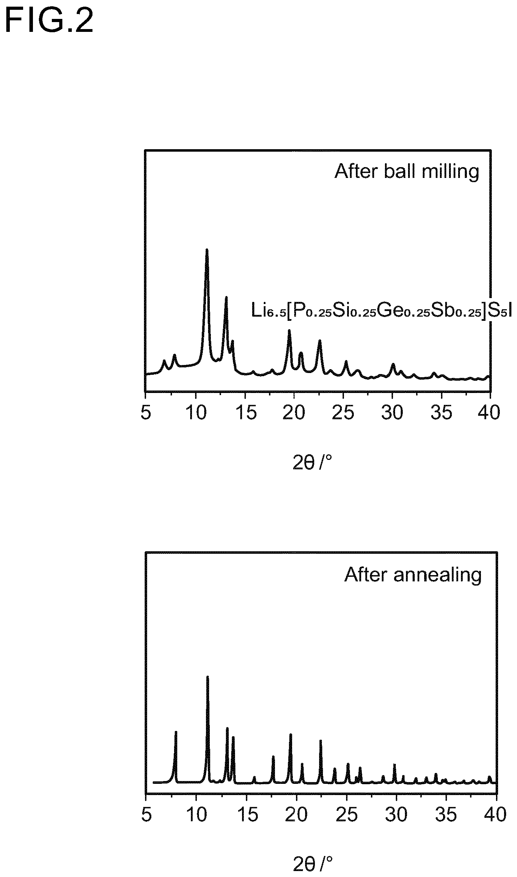

For the material of the composition Li_{6.5}P_{0.25}Si_{0.25}Ge_{0.25}Sb_{0.25}S₅I, XRD patterns of a sample obtained without annealing (no step (c)) and another one obtained with annealing (step (c)) followed by natural cooling were compared. After annealing the reflections in the XRD pattern are more clearly defined, indicating an increased crystallinity than after ball milling without annealing (fig. 2).

The cooling conditions (natural cooling, or fast cooling by quenching, or slow cooling over 48 hours) did not show a significant influence on the XRD pattern of Li_{6.5}P_{0.25}Si_{0.25}Ge_{0.25}Sb_{0.25}S₅I.

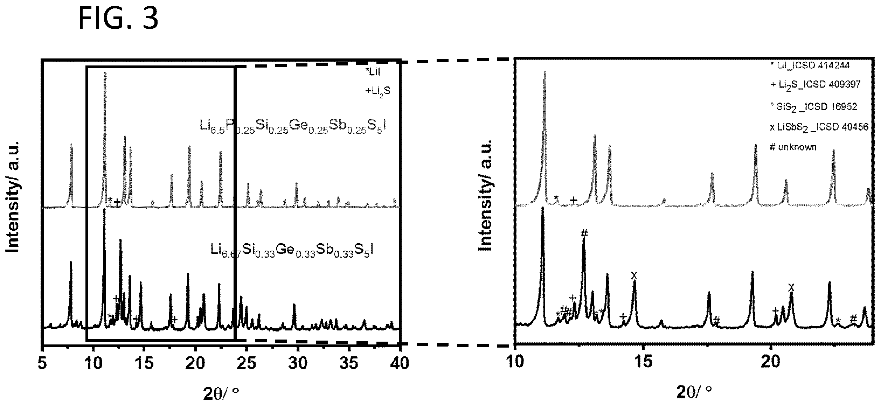

Fig. 3 shows XRD patterns (cf. fig. 3) of Li_{6.5}P_{0.25}Si_{0.25}Ge_{0.25}Sb_{0.25}S₅I and Li_{6.7}Si_{0.33}Ge_{0.33}Sb_{0.33}S₅I (both annealed at 500 °C). The XRD pattern of Li_{6.5}P_{0.25}Si_{0.25}Ge_{0.25}Sb_{0.25}S₅I having four different elements (P, Si, Ge, Sb) at the lattice sites, which in the parent material L₆PS₅I are occupied by phosphorus, shows a single phase with only traces of the educts Lil and Li₂S. The XRD pattern of Li_{6.7}Si_{0.33}Ge_{0.33}Sb_{0.33}S₅I having three different elements (Si, Ge, Sb) at the lattice sites, which in the parent material L₆PS₅I are occupied by phosphorus, shows multiple phases including LiSbS₂ and several unknown phases. Thus, it may be assumed that the presence of four different elements (P, Si, Ge, Sb) at the lattice sites, which in the parent material L₆PS₅I are occupied by phosphorus results in entropy stabilization so that a single phase is obtained.

### 3. Ionic conductivity

Electrochemical impedance spectroscopy (EIS) was measured using a custom-made two-electrode cell, including two stainless steel plungers and a PEEK sleeve with an inner diameter of 10 mm. Around 150 mg powder was introduced into the cell and pressed at 3 t for 3 min (i.e. cold-pressed). EIS was measured from 0.1 Hz to 7 MHz with a 20 mV voltage amplitude using a SP-200 potentiostat (BioLogic) at room temperature. An external pressure of 2 t was applied during the measurement.

The results are given in table 1 below.

**Table 1**

| Material composition | Preparation (for details see section 1 above) | Ionic conductivity at 25°C/ mS/cm⁻¹ |
|---|---|---|
| Li_{6.171}P_{0.75}Si_{0.083}Ge_{0.083}Sb_{0.083}S₅I | Mechanochemical processing with subsequent annealing and natural cooling | 0.063 |
| Li_{6.345}P_{0.5}Si_{0.166}Ge_{0.166}Sb_{0.083}S₅I | | 1.89 |
| Li_{6.5}P_{0.25}Si_{0.25}Ge_{0.25}Sb_{0.25}S₅I | | 10.7 |
| Li_{6.5}P_{0.25}Si_{0.25}Ge_{0.25}Sb_{0.25}S₅I | Mechanochemical processing with subsequent annealing and quenching | 7.0 |
| Li_{6.5}P_{0.25}Si_{0.25}Ge_{0.25}Sb_{0.25}S₅I | Mechanochemical processing with subsequent annealing and slow cooling | 5.2 |

The following trends may be recognized from the data given in table 1:
For the three different materials having a composition according to general formula Li₍₆₊ₘ₎P₍₁₋₃ₙ₎SiₙGeₙSbₙS₅I, the ionic conductivity increases with decreasing phosphorus content.

Surprisingly, the cooling conditions (natural cooling, or fast cooling by quenching, or slow cooling over 48 hours) appear to have a significant influence on the ionic conductivity of Li_{6.5}P_{0.25}Si_{0.25}Ge_{0.25}Sb_{0.25}S₅I. Accordingly, natural cooling (cooling rate approximately 5°C per minute) appears favorable, compared to both, quenching and slow cooling.

## Claims

1. Solid material having a composition according to formula (IIc)
Li₆₊ₘP₁₋₃ₙM1^{(z1)+}ₙM2^{(z2)+}ₙM3^{(z3)+}ₙY₅X (IIc)
wherein
X is selected from F, Cl, Br and I,
Y is selected from O, S, Se and Te,
M1^{(z1)+} to M3^{(z3)+} are selected from the group consisting of Si⁴⁺, Ge⁴⁺, Sn⁴⁺ and Sb⁵⁺
n is a number in the range of from 0.05 to 0.3,
and m = 5 - [5*(1-x) + n*(z1 + z2 + z3)].

2. Solid material according to claim 1, wherein X is I or Y is S.

3. Solid material according to claim 1, wherein X is I and Y is S.

4. Solid material according to any of claims 1 to 3, wherein n is a number in the range of from 0.2 to 0.28.

5. Solid material according to any of claims 1 to 4, wherein M1^{(z1)+} is Si⁴⁺, M2^{(z2)+} is Ge⁴⁺, and M3^{(z3)+} is Sb⁵⁺, X is I (iodine) and Y is S.

6. Solid material according to any preceding claim, wherein said material comprises a crystalline phase having an argyrodite structure.

7. Process for preparing a solid material according to any of claims 1 to 6,
said process comprising the process steps of
(a) providing a reaction mixture comprising the precursors
(1) one or more of oxide, sulfide, selenide and telluride of lithium,
(2) one or more of oxide, sulfide, selenide and telluride of phosphorous,
(3) one or more compound LiX wherein X is selected from F, Cl, Br and I,
(4) compounds selected from the group consisting of oxides, sulfides, selenides and tellurides of three cations selected from the group consisting of , Si⁴⁺, Ge⁴⁺, Sn⁴⁺, and Sb⁵⁺,
(5) optionally one or more of S, Se and Te in elemental form,
wherein in said reaction mixture the molar ratio of all elements is selected so that it matches formula (IIc),
(b) reacting the precursors to obtain a solid material having a composition according to formula (IIc).

8. Process according to claim 7, wherein in step (a)
said precursor (1) is Li₂S, and/or
said precursor (2) is P₂S₅, and/or
said precursor (3) is Lil, and/or
said precursor (4) is selected from the group consisting of SiS₂, GeS₂, SnS₂ and Sb₂S₃, and/or
said precursor (5) is elemental sulphur or is not present.

9. Process according to claim 7 or 8, wherein in step (a)
said precursor (1) consists of Li₂S,
said precursor (2) consists of P₂S₅,
said precursor (3) consists of Lil,
said precursor (4) consists of SiS₂, GeS₂, and Sb₂S₃,
said precursor (5) consist of elemental sulfur or is not present.

10. Process according to any of claim 7 to 9, comprising the steps
(a) preparing or providing a solid reaction mixture comprising the precursors as defined in any of claims 7 to 9
(b1) heat-treating the reaction mixture in a temperature range of from 200°C to 600°C for a total duration of 1 to 48 hours or more so that a reaction product is formed and cooling the reaction product so that a solid material having a composition according to formula (IIc) is obtained.

11. Process according to any of claims 7 to 9, comprising the steps
(a) preparing or providing a solid reaction mixture comprising the precursors as defined in any of claims 7 to 9
(b2) mechanochemical treatment of the solid reaction mixture so that a solid material having a composition according to formula (IIc) is obtained.

12. Process according to claim 11, further comprising the step of
(c) annealing the solid material obtained by mechanochemical treatment in a temperature range of from 200°C to 600°C for a total duration of 1 to 48 hours and cooling the annealed solid material.

13. A solid structure for an electrochemical cell, wherein said solid structure is selected from the group consisting of cathode, anode and separator, wherein the solid structure for an electrochemical cell comprises a solid material according to any of claims 1 to 6.

14. An electrochemical cell comprising a solid material according to any of claims 1 to 6.

15. Electrochemical cell according to claim 14, wherein the solid material according to any of claims 1 to 6 is a component of a solid structure as defined in claim 13.

## Patentansprüche

1. Feststoff mit einer Zusammensetzung nach der Formel (IIc)
Li₆₊ₘP₁₋₃ₙM1^{(z1)+}ₙM2^{(z2)+}ₙM3^{(z3)+}ₙY₅X (IIc)
worin
X wird aus F, Cl, Br und I ausgewählt,
Y wird aus O, S, Se und Te ausgewählt,
M1^{(z1)+} bis M3^{(z3)+} werden aus der Gruppe bestehend aus Si⁴⁺, Ge⁴⁺, Sn⁴⁺ and Sb⁵⁺ ausgewählt,
n ist eine Zahl im Bereich von 0,05 bis 0,3,
und m = 5 - [5*(1-x) + n*(z1 + z2 + z3)].

2. Feststoff nach Anspruch 1, wobei X ist I oder Y ist S.

3. Feststoff nach Anspruch 1, wobei X I und Y S ist.

4. Feststoff nach einem der Ansprüche 1 bis 3, wobei n eine Zahl im Bereich von 0,2 bis 0,28 ist.

5. Feststoff nach einem der Ansprüche 1 bis 4, wobei M1^{(z1)+} Si⁴⁺ ist, M2^{(z2)+} Ge⁴⁺ ist und M3^{(z3)+} Sb⁵⁺ ist, X ist I (Jod) und Y ist S.

6. Feststoff nach einem der vorhergehenden Ansprüche, wobei das Material eine kristalline Phase mit einer Argyroditstruktur umfasst.

7. Verfahren zur Herstellung eines Feststoffs nach einem der Ansprüche 1 bis 6,
Das Verfahren umfasst die Verfahrensschritte
ein) Bereitstellen eines Reaktionsgemisches, das die Vorläufer
(1) eines oder mehrere aus Oxid, Sulfid, Selenid und Tellurid des Lithiums,
(2) eines oder mehrere aus Oxid, Sulfid, Selenid und Tellurid des Phosphors,
(3) eine oder mehrere Verbindungen LiX, wobei X aus F, Cl, Br und I ausgewählt ist,
(4) Verbindungen, ausgewählt aus der Gruppe bestehend aus Oxiden, Sulfiden, Seleniden und Telluride von drei Kationen, ausgewählt aus der Gruppe bestehend aus Si⁴⁺, Ge⁴⁺, Sn⁴⁺ und Sb⁵⁺
(5) gegebenenfalls eines oder mehrere der S, Se und Te in elementarer Form,
wobei in dem Reaktionsgemisch das molare Verhältnis aller Elemente so gewählt ist, dass es der Formel (Ilc) entspricht,
b) Umsetzung der Vorläufer zur Gewinnung eines Feststoffs mit einer Zusammensetzung nach der Formel (IIc).

8. Verfahren nach Anspruch 7, wobei in Schritt (a)
der Vorläufer (1) Li₂S ist und/oder
der Vorläufer (2) P₂S₅ ist und/oder
der Vorläufer (3) Lil ist und/oder
der Vorläufer (4) aus der Gruppe ausgewählt wird, die aus SiS₂, GeS₂, SnS₂ und Sb₂S₃ besteht, und/oder
es sich bei dem Vorläufer (5) sich um elementaren Schwefel handelt oder er ist nicht vorhanden.

9. Verfahren nach Anspruch 7 oder 8, wobei in Schritt (a)
der Vorläufer (1) aus Li₂S besteht,
der Vorläufer (2) aus P2S5 besteht,
der Vorläufer (3) aus Lil besteht,
der Vorläufer (4) aus SiS₂, GeS₂ und Sb₂S₃ besteht,
die Vorstufe (5) aus elementarem Schwefel besteht oder nicht vorhanden ist.

10. Verfahren nach einem der Ansprüche 7 bis 9, umfassend die Schritte
ein) Herstellen oder Bereitstellen eines festen Reaktionsgemisches, das die in einem der Ansprüche 7 bis 9 definierten Vorläufer enthält
(b1) Wärmebehandlung des Reaktionsgemisches in einem Temperaturbereich von 200 °C bis 600 °C für eine Gesamtdauer von 1 bis 48 Stunden oder länger, so dass ein Reaktionsprodukt gebildet wird, und Abkühlen des Reaktionsprodukts, so dass ein festes Material mit einer Zusammensetzung gemäß der Formel (Ilc) erhalten wird.

11. Verfahren nach einem der Ansprüche 7 bis 9, umfassend die Schritte
ein) Herstellen oder Bereitstellen eines festen Reaktionsgemisches, das die in einem der Ansprüche 7 bis 9 definierten Vorläufer enthält
(b2) mechanochemische Behandlung des festen Reaktionsgemisches, so dass ein fester Stoff mit einer Zusammensetzung gemäß der Formel (IIc) erhalten wird.

12. Verfahren nach Anspruch 11, das ferner den Schritt
c) Glühen des durch mechanochemische Behandlung gewonnenen Feststoffs in einem Temperaturbereich von 200 °C bis 600 °C für eine Gesamtdauer von 1 bis 48 Stunden und Abkühlen des geglühten Feststoffs.

13. Festkörperstruktur für eine elektrochemische Zelle, wobei die Feststruktur aus der Gruppe bestehend aus Kathode, Anode und Separator ausgewählt ist, wobei die Feststruktur für eine elektrochemische Zelle ein Festmaterial nach einem der Ansprüche 1 bis 6 umfasst.

14. Elektrochemische Zelle, die ein festes Material nach einem der Ansprüche 1 bis 6 umfasst.

15. Elektrochemische Zelle nach Anspruch 14, wobei der Feststoff nach einem der Ansprüche 1 bis 6 Bestandteil einer Festkörperstruktur nach Anspruch 13 ist.

## Revendications

1. Matériau solide ayant une composition conforme à la formule (IIc)
Li₆₊ₘP₁₋₃ₙM1^{(z1)+}ₙM2^{(z2)+}ₙM3^{(z3)+}ₙY₅X (IIc)
Où
X est choisi parmi F, CI, Br et I,
Y est choisi parmi O, S, Se et Te,
M1^{(z1)+} à M3^{(z3)+} sont choisis dans le groupe composé de Si⁴⁺, Ge⁴⁺, Sn⁴⁺ et Sb⁵⁺,
n est un nombre compris entre 0,05 et 0,3,
et m = 5 - [5*(1-x) + n*(z1 + z2 + z3)].

2. Matériau solide selon la revendication 1, dans lequel X est I ou Y est S.

3. Matériau solide selon la revendication 1, dans lequel X est I et Y est S.

4. Matériau solide selon l'une quelconque des revendications 1 à 3, dans lequel n est un nombre compris entre 0,2 et 0,28.

5. Matériau solide selon l'une quelconque des revendications 1 à 4, dans lequel M1^{(z1)+} est Si⁴⁺, M2^{(z2)+} est Ge⁴⁺ et M3^{(z3)+} est Sb⁵⁺, X est I (iode) et Y est S.

6. Matériau solide selon l'une quelconque des revendications précédentes, dans lequel ledit matériau comprend une phase cristalline ayant une structure d'argyrodite.

7. Procédé de préparation d'un matériau solide selon l'une quelconque des revendications 1 à 6,
ledit procédé comprenant les étapes du processus
a) fournissant un mélange réactionnel comprenant les précurseurs
(1) un ou plusieurs d'oxyde, de sulfure, de séléniure et de tellurure de lithium,
(2) un ou plusieurs d'oxyde, de sulfure, de séléniure et de tellurure de phosphore,
(3) un ou plusieurs composés LiX dans lesquels X est choisi parmi F, Cl, Br et I,
(4) composés choisis dans le groupe constitué par les oxydes, les sulfures, les séléniures et les tellurures de trois cations choisis dans le groupe constitué par Si⁴⁺, Ge⁴⁺, Sn⁴⁺ et Sb⁵⁺,
(5) éventuellement un ou plusieurs des S, Se et Te sous forme élémentaire,
dans lequel dans ledit mélange réactionnel, le rapport molaire de tous les éléments est choisi de manière à ce qu'il corresponde à la formule (Ilc),
b) Faire réagir les précurseurs pour obtenir un matériau solide ayant une composition conforme à la formule (IIc).

8. Procédé selon la revendication 7, dans lequel à l'étape (a)
ledit précurseur (1) est Li₂S, et/ou
ledit précurseur (2) est P₂S₅, et/ou
ledit précurseur (3) est Lil, et/ou
ledit précurseur (4) est choisi dans le groupe constitué par SiS₂, GeS₂, SnS₂ et Sb₂S₃, et/ou
ledit précurseur (5) est du soufre élémentaire ou n'est pas présent.

9. Procédé selon la revendication 7 ou 8, dans lequel à l'étape (a)
ledit précurseur (1) est constitué de Li₂S,
ledit précurseur (2) est constitué de P₂S₅,
ledit précurseur (3) est constitué de Lil,
ledit précurseur (4) est constitué de SiS₂, GeS₂, et Sb₂S₃,
ledit précurseur (5) est constitué de soufre élémentaire ou n'est pas présent.

10. Procédé selon l'une quelconque des revendications 7 à 9, comprenant les étapes
a) préparation ou fourniture d'un mélange réactionnel solide comprenant les précurseurs tels que définis dans l'une quelconque des revendications 7 à 9
(b1) traitement thermique du mélange réactionnel dans une plage de température allant de 200 °C à 600 °C pendant une durée totale de 1 à 48 heures ou plus afin qu'un produit de réaction se forme et refroidissement du produit de réaction de sorte qu'un matériau solide ayant une composition conforme à la formule (IIc) soit obtenu.

11. Procédé selon l'une quelconque des revendications 7 à 9, comprenant les étapes
a) préparation ou fourniture d'un mélange réactionnel solide comprenant les précurseurs tels que définis dans l'une quelconque des revendications 7 à 9
(b2) traitement mécanochimique du mélange réactionnel solide de manière à obtenir une matière solide ayant une composition conforme à la formule (IIc).

12. Procédé selon la revendication 11, comprenant en outre l'étape
(c) recuit du matériau solide obtenu par traitement mécanochimique dans une plage de température de 200°C à 600°C pendant une durée totale de 1 à 48 heures et refroidissement du matériau solide recuit.

13. Structure solide pour une pile électrochimique, dans laquelle ladite structure solide est choisie dans le groupe constitué de la cathode, de l'anode et du séparateur, dans laquelle la structure solide d'une pile électrochimique comprend un matériau solide selon l'une quelconque des revendications 1 à 6.

14. Pile électrochimique comprenant un matériau solide selon l'une quelconque des revendications 1 à 6.

15. Cellule électrochimique selon la revendication 14, dans laquelle le matériau solide selon l'une quelconque des revendications 1 à 6 est un composant d'une structure solide telle que définie dans la revendication 13.
